# EUROPÄISCHE PATENTANMELDUNG

(11) **EP 1 248 359 A2**
(43) Veröffentlichungstag der Anmeldung: **09.10.2002**
(21) Anmeldenummer: 02004812.0
(22) Anmeldetag: 02.03.2002
(51) Int. Cl.: H02P 9/04

(54) **Verfahren zum Betrieb eines Generators bei einem Fahrzeug**

(30) Priorität: 06.04.2001 DE 10117129
(71) Anmelder: Bayerische Motoren Werke Aktiengesellschaft, 80809 München (DE)
(72) Erfinder: Kiefer, Wolf, 82194 Gröbenzell (DE)

(57) **Zusammenfassung**

Die Erfindung betrifft ein Verfahren zum Betrieb eines Generators bei ein Fahrzeug, der von einem Verbrennungsmotor angetrieben wird.

Zur Emissionsverbesserung, insbesondere nach dem Kaltstart des Verbrennungsmotors, wird vorgeschlagen, dass der Generator nicht unmittelbar nach dem Startvorgang, sondern erst nach einer bestimmten Zeitdauer so betrieben wird, dass er Energie an ein Bordnetz abgibt.

## Beschreibung

Die Erfindung betrifft ein Verfahren zum Betrieb eines Generators bei einem Fahrzeug gemäß dem Oberbegriff des Anspruchs 1.

Bei herkömmlichen Kraftfahrzeugen mit Verbrennungsmotoren ist üblicherweise ein stromerzeugender Generator vorgesehen, der die Stromversorgung für die elektrischen Systeme des Fahrzeugs zusammen mit einer Speicherbatterie sicherstellt. Der Generator wird üblicherweise unmittelbar nach dem Start des Verbrennungsmotors rampenförmig, d.h. mit zunehmender Belastung, zugeschaltet und erzeugt eine elektrische Leistung, die bedarfsabhängig abgerufen wird und eine entladene Speicherbatterie auflädt.

Besonders beim Kaltstart eines Verbrennungsmotors treten in der ersten Betriebsphase des Verbrennungsmotors jedoch hohe Emissionswerte auf, die durch ein unmittelbares Zuschalten des Generators nach dem Start des Verbrennungsmotors noch verschlechtert werden. Bei einer im wesentlichen vollständig geladenen Batterie gibt ein Generator bei einem bekannten Motor beispielsweise 1,5 KW an Leistung ab. Befindet sich die Batterie in einem schlechten Ladezustand oder ist sie bereits stark gealtert, so können Belastungen von bis zu 2,75 KW auftreten.

Aufgabe der vorliegenden Erfindung ist es, das Emissionsverhalten eines Verbrennungsmotors kurz nach seinem Start zu verbessern.

Diese Aufgabe wird durch die in Anspruch 1 genannten Merkmale gelöst.

Ein wesentlicher Gedanke der vorliegenden Erfindung ist es, den Verbrennungsmotor kurz nach dem Start nicht noch zusätzlich durch zum Teil hohe Generatorleistungen zu belasten. Dazu wird der Generator derart betrieben, dass er für eine bestimmte Zeit nach dem Startvorgang im wesentlichen keine Energie an das Bordnetz abgibt.

Gemäß einer ersten Ausführungsform der Erfindung wird der Generator erst nach einer bestimmten Zeit elektrisch zugeschalten, also mit dem vorhandenen Bordnetz verbunden. Gemäß einer alternativen Ausführungsform wird in dem ersten Zeitraum eine Generatorspannung erzeugt, die unterhalb der Bordnetzspannung liegt.

Schließlich wird bei einem Ausführungsbeispiel auch noch eine Möglichkeit aufgezeigt, den Generator während des ersten Zeitraums mechanisch vom Verbrennungsmotor zu entkoppeln, so dass er überhaupt nicht mehr angetrieben wird. Mit dieser Vorgehensweise können zwar auch die Reibungsverluste im Generator vermieden werden, allerdings ist ein erhöhter konstruktiver Aufwand in Kauf zu nehmen.

Der genannten erste Zeitraum für die Abschaltung kann fest vorgegeben oder frei wählbar sein. Wird die Zeit wählbar gestaltet, so kann sie beispielsweise in Abhängigkeit von Fahrzeugbetriebszuständen, wie den Abgasdaten, gewählt werden. Wird sie fest vorgegeben, kann der Generator beispielsweise für 10 oder 20 Sekunden nach dem Start deaktiviert sein. Je nach Ausführungsform des Generators ist es möglich, dass die "elektrische Abschaltung" (Entkopplung) aktiv über eine sog. BSD-Schnittstelle am Generator selbst erfolgt.

Bei der Alternative, wenn die vom Generator erzeugte Spannung unterhalb der Bordnetzspannung liegt, belasten Verbraucher lediglich die Batterie und nicht den Generator. Im übrigen wird die Batterie aus dem Generator auch nicht aufgeladen. Daher kommt es zu keiner übermäßigen zusätzlichen Last aus dem Generatorbetrieb, so dass auch der Verbrennungsmotor keine signifikante Leistung an den Generator abgeben muss. Bricht die Batteriespannung aufgrund einer zu großen Belastung durch Verbraucher allerdings ein, so kann der Generator als "back-up" dienen, so dass der Spannungsrückgang nur bis zum Niveau der vom Generator zu diesem Zeitpunkt erzeugten Spannung erfolgt.

Insgesamt lassen sich mit den obigen Vorgehensweisen die Abgasemissionswerte im Startbereich, insbesondere beim Kaltstart eines Verbrennungsmotors, erheblich verbessern.

Die vorliegende Erfindung wird nachfolgend anhand zweier Ausführungsbeispiele und mit Bezug auf die beiden beiliegenden Zeichnungen näher erläutert. Die Zeichnungen zeigen in
- Fig. 1: ein Ablaufdiagramm einer ersten Ausführungsform des erfindungsgemäßen Verfahrens und
- Fig. 2: ein Ablaufdiagramm einer zweiten Ausführungsform des erfindungsgemäßen Verfahrens.

Das erfindungsgemäße Verfahren benötigt keine wesentlichen Hardwareänderungen gegenüber herkömmlichen Systemen. Wie üblich ist ein Verbrennungsmotor mit einem Generator elektrisch koppelbar oder gekoppelt. Der Generator gibt je nach Generatoransteuerung eine entsprechende elektrische Leistung ab. Bekannt in diesem Zusammenhang sind sog. BSD-Schnittstellen am Generator, mit denen dieser bezüglich seiner Leistungsabgabe steuerbar ist. Der Generator kann auch vollständig elektrisch vom Bordnetz getrennt werden, so dass er zwar mechanisch mit dem Verbrennungsmotor gekoppelt ist, jedoch ohne die Abgabe elektrischer Leistung - abgesehen von der Reibungsverlustleistung - keine wesentliche Leistung vom Verbrennungsmotor fordert.

Beim ersten Ausführungsbeispiel des vorliegenden erfindungsgemäßen Verfahrens wird ein Verbrennungsmotor im Schritt 10 gestartet. Nach dem Start des Verbrennungsmotors wird ein Timer in Schritt 12 gestartet. Nach 10 Sekunden werden die Emissionsdaten des Verbrennungsmotors abgefragt und überprüft (Schritt 14), und im Schritt 16 wird festgestellt, ob die Emissionsdaten geeignet sind, den Generator bereits jetzt zuzuschalten. Ist dies nicht der Fall (Nein), so wird zu Schritt 14 zurückverzweigt und der Verbrennungsmotor weitere 10 Sekunden ohne eine elektrische Zuschaltung des Generators betrieben. Diese Schleife wird solange durchgeführt, bis im Schritt 16 festgestellt wird, dass die Emissionsdaten zur elektrischen Zuschaltung des Generators geeignet sind (Ja). In diesem Fall wird der Generator im Schritt 18 dann in rampenförmiger Weise zugeschaltet.

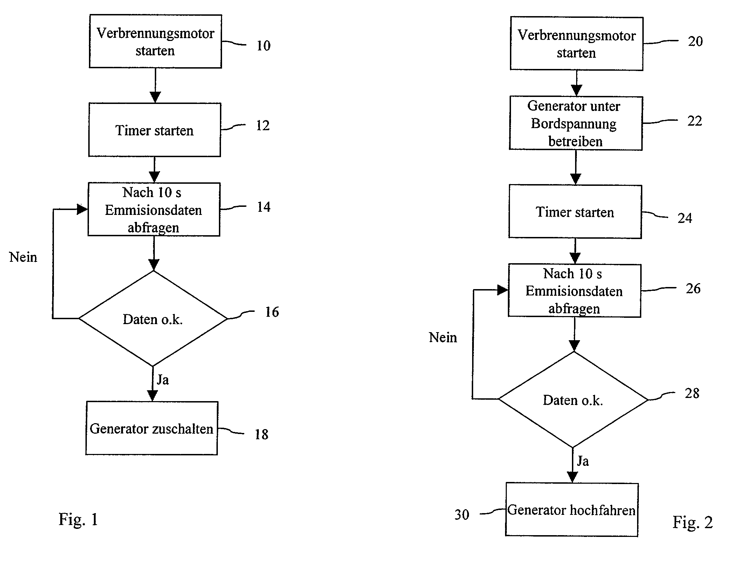

Die zweite Alternative gemäß Fig. 2 beginnt ebenfalls mit dem Start des Verbrennungsmotors in Schritt 20. Unmittelbar nach dem Start des Verbrennungsmotors wird der Generator in einer Weise betrieben, dass die erzeugte Generatorspannung unter der Bordnetzspannung liegt (Schritt 22). Gleichzeitig wird ein Timer gestartet (Schritt 24), und nach 10 Sekunden werden wiederum die Emissionsdaten in Schritt 26 abgefragt. Sind die Emissionsdaten nicht geeignet, den Generator hochzufahren (Nein), so wird in Schritt 28 zum Schritt 26 zurückverzweigt. Der Verbrennungsmotor wird dann weitere 10 Sekunden mit einem Generator betrieben, der eine Spannung unterhalb der Bordnetzspannung erzeugt. Diese Schleife wird solange durchgeführt, bis im Schritt 28 festgestellt wird, dass die Emissionsdaten zur Zuschaltung des Generators geeignet sind (Ja). Sobald in Schritt 28 festgestellt wird, dass die Emissionsdaten zum Hochfahren eines Generators geeignet sind, wird der Generator auf seine reguläre Betriebsspannung rampenförmig hochgefahren.

Die vorliegende Erfindung ermöglicht es, eine signifikante Belastung des Verbrennungsmotors in der Startphase zu vermeiden, so dass die Emissionswerte in der kritischen Anfangsphase kleingehalten werden können.

## Patentansprüche

1. Verfahren zum Betrieb eines Generators bei einem Fahrzeug, der von einem Verbrennungsmotor angetrieben wird und seine Energie an ein Bordnetz abgibt,
**dadurch gekennzeichnet,**
**dass** der Generator unmittelbar nach dem Startvorgang des Verbrennungsmotors für eine bestimmte Zeitdauer derart betrieben wird, dass er keine Energie an das Bordnetz abgibt.

2. Verfahren nach Anspruch 1,
**dadurch gekennzeichnet,**
**dass** während der bestimmten Zeitdauer die vom Generator erzeugte Spannung (Erregerspannung) unter der normalen Bordnetzspannung liegt.

3. Verfahren nach Anspruch 2,
**dadurch gekennzeichnet,**
**dass** die Hochschaltung der Erregerspannung auf die Bordnetzspannung nach der bestimmten Zeitdauer rampenförmig durchgeführt wird.

4. Verfahren nach einem der Ansprüche 1 bis 3,
**dadurch gekennzeichnet,**
**dass** die bestimmte Zeitdauer wählbar ist.

5. Verfahren nach Anspruch 4,
**dadurch gekennzeichnet,**
**dass** die bestimmte Zeitdauer in Abhängigkeit von Fahrzeugbetriebsparameter gewählt wird.

6. Verfahren nach Anspruch 1,
**dadurch gekennzeichnet,**
**dass** der Generator beim Start des Verbrennungsmotors zunächst vom Bordnetz des Fahrzeugs elektrisch abgekoppelt ist oder wird und erst nach der bestimmten Zeitdauer nach dem Start des Verbrennungsmotors mit dem Bordnetz elektrisch gekoppelt wird.

7. Verfahren nach Anspruch 6,
**dadurch gekennzeichnet,**
**dass** die Kopplung des Generators mit dem Bordnetz, also die Zuschaltung des Erregerstroms, rampenförmig vorgenommen wird.

8. Verfahren nach Anspruch 6 oder 7,
**dadurch gekennzeichnet,**
**dass** die bestimmte Zeitdauer wählbar ist.

9. Verfahren nach einem der Ansprüche 6 bis 8,
**dadurch gekennzeichnet,**
**dass** die bestimmte Zeitdauer in Abhängigkeit von Fahrzeugbetriebsparameter gewählt wird.

10. Verfahren nach einem der Ansprüche 6 bis 9,
**dadurch gekennzeichnet,**
**dass** der Generator unmittelbar nach dem Start mittels eines Abschaltbefehls vom Bordnetz elektrisch entkoppelt wird.

11. Verfahren nach Anspruch 1,
**dadurch gekennzeichnet,**
**dass** der Generator und der Verbrennungsmotor voneinander entkoppelbar sind, dass der Generator beim Start des Verbrennungsmotors zunächst vom Verbrennungsmotor mechanisch abgekoppelt ist und erst nach einer bestimmten Zeitdauer nach dem Start des Verbrennungsmotors mit dem Verbrennungsmotor antriebsmäßig gekoppelt wird.

12. Verfahren nach Anspruch 11,
**dadurch gekennzeichnet,**
**dass** zum mechanischen Entkoppeln zwischen Verbrennungsmotor und Generator eine Kupplung zwischengeschaltet ist.

13. Verfahren nach Anspruch 11 oder 12,
**dadurch gekennzeichnet,**
**dass** die bestimmte Zeitdauer in Abhängigkeit von der Bordnetzspannung gewählt wird.
